# EUROPÄISCHE PATENTSCHRIFT

(11) **EP 3 023 039 B1**
(45) Veröffentlichungstag und Bekanntmachung des Hinweises auf die Patenterteilung: **13.05.2020**
(21) Anmeldenummer: 15191425.6
(22) Anmeldetag: 26.10.2015
(51) Int. Cl.: A47J 31/54, F24H 1/14, H05B 3/04, H05B 3/48

(54) **HEIZKÖRPER, DURCHLAUFERHITZER FÜR HEISSGETRÄNKEMASCHINEN DARAUS UND VERFAHREN ZU DEREN HERSTELLUNG**
RADIATOR, CONTINUOUS-FLOW HEATER FOR HOT BEVERAGE MACHINES AND METHOD OF MAKING THE SAME
CORPS DE CHAUFFAGE, CHAUFFE-EAU INSTANTANÉ POUR MACHINES À BOISSONS CHAUDES ET SON PROCÉDÉ DE FABRICATION

(30) Priorität: 20.11.2014 DE 102014223723
(43) Veröffentlichungstag der Anmeldung: 25.05.2016
(73) Patentinhaber: BSH Hausgeräte GmbH, 81739 München (DE)
(72) Erfinder: Franzke, Peter, 83229 Aschau/Sachrang (DE); Quittek, Benno, 83346 Bergen (DE); Hafner, Ruth, 83352 Altenmarkt a.d. Alz (DE); Wölfler, Andreas, 5760 Saalfelden (AT)

(56) Entgegenhaltungen:
- EP-A1- 2 572 612
- WO-A1-2013/170887
- WO-A1-2014/026643

## Beschreibung

Die Erfindung betrifft einen zylindrischen Heizkörper für einen Durchlauferhitzer einer Heißgetränkezubereitungseinrichtung für Haushaltszwecke mit einer metallischen Mantelfläche, mit einer Füllung aus einem pulverförmigen Material mit einem hohen Schmelzpunkt, in der Regel aus Magnesiumoxidpulver, und mit einer darin eingeschlossenen Heizwendel. Außerdem beschreibt die Erfindung einen Durchlauferhitzer aus einem derartigen Heizkörper und ein Verfahren zu Herstellung eines Heizkörpers für einen Durchlauferhitzer einer Heißgetränkezubereitungseinrichtung.

Die WO 2011/072632 beschreibt einen Strangheizkörper für Getränkezubereitungsgeräte, bestehend aus einem Wasserführungsrohr und an diesem mittelbar oder unmittelbar befestigten elektrischen Heizkörpern, wobei das Wasserführungsrohr endseitig verjüngt ist und die Verjüngungszone einen Aufsteckbereich für einen Wasserführungsschlauch bildet. Der Strangheizkörper setzt sich also aus einem Wasserführungsrohr einerseits und einem oder mehreren elektrischen Heizkörpern andererseits aus separaten Bauteilen zusammen. Alternativ gibt es elektrische Durchlauferhitzer, die aus einem Stranggussteil aus Aluminium oder dergleichen gefertigt sind, das einen Durchflusskanal für das zu erhitzende Wasser und eine parallel dazu verlaufende Längsnut aufweist, in die ein Rohrheizkörper als Heizeinrichtung eingepresst wird, wie ihn die DE 31126511 offenbart. In beiden Fällen werden die Rohrheizkörper aus einem Rohr in der Regel aus Aluminium, einer Heizwendel und einer Füllung aus Magnesiumoxidpulver gebildet. Zur Fertigung wird die Heizwendel vertikal in das stehende Rohr eingeführt und anschließend das Magnesiumoxidpulver unter ständigem Rütteln des Rohres angefüllt, um Lufteinschlüsse weitgehend zu vermeiden. Nach dem Füllen und endseitigen Verschließen des Rohres wird es mechanisch verformt, nämlich gepresst oder gewalzt, um eine gewünschte Dichte des Magnesiumoxidpulvers zu erreichen. Diese Herstellung ist aufwändig und fehleranfällig, weil insbesondere beim abschließenden mechanischen Verformen des Aluminiumrohres die Heizwendel ungewollt verformt werden kann. Daraus können Leistungseinbußen des Rohrheizkörpers resultieren.

Heizkörper bzw. Durchlauferhitzer sind dem Fachmann ebenfalls bekannt aus den Druckschriften WO 2013/170887 A1, EP 2 572 612 A1 und WO 2014/026643 A1.

Aufgabe der Erfindung ist es, einen Heizkörper bzw. einen Durchlauferhitzer mit einem derartigen Heizkörper und ein Herstellungsverfahren für beide anzugeben, der bzw. das Fertigungsvorteile bietet.

Diese Aufgabe wird bei einem eingangs genannten Heizkörper erfindungsgemäß dadurch gelöst, dass er eine Mantelfläche aus verformtem Blech mit mindestens einer Naht in der Mantelfläche aufweist. Die Mantelfläche kann aus einem planen Blech geformt sein, das durch Umbiegen in mindestens einem Biegeschritt um einen Winkel von insgesamt mindestens 90° an mindestens einer Längsseite bzw. parallel zu ihr verformt ist, an der sie mit der gegenüberliegenden Längsseite verbunden ist. Die Erfindung wendet sich also davon ab, für einen Heizkörper ein vorgefertigtes Rohr zu verwenden. Sie verfolgt vielmehr das Prinzip, die Mantelfläche des zylindrischen Heizkörpers aus einem Blechzuschnitt auszubilden, der daher an einer Fügestelle eine Naht aufweist, an der zwei Längsseiten des Blechzuschnitts verbunden sind. An der Naht können die beiden langen Seiten des Blechzuschnitts beispielsweise stumpf gestoßen, gefalzt, gelötet, geschweißt oder gecrimt sein. Der wesentliche Vorteil des erfindungsgemäßen Heizkörpers besteht jedoch darin, dass er aufgrund seiner Herstellung aus einem Blechzuschnitt nicht zwingend eine kreiszylindrische Form aufweisen muss, sondern jede andere beliebige zylindrische Gestalt annehmen kann. "Zylindrisch" ist daher nicht im umgangssprachlich beschränkten Sinne einer Kreiszylinderform, sondern in der weiteren, geometrischen Bedeutung als Form eines Körper zu verstehen, die von zwei kongruenten Flächen in parallelen Ebenen, nämlich seinen Grund- und Deckflächen, und einer Mantel- bzw. Zylinderfläche begrenzt wird, wobei die Mantelfläche von parallelen Geraden gebildet wird. Damit sind unter Zylindern beispielsweise auch Prismen oder schiefe Zylinder mit einer elliptischen oder vieleckigen Grundfläche zu verstehen. Durch seine Ausbildung aus einem Blechzuschnitt, der in eine nahezu beliebige zylindrische Form gebracht werden kann, kann der erfindungsgemäße Heizkörper eine auf seinen Einsatzzweck oder seinen Einsatzort hin optimierte Gestalt annehmen. Insbesondere kann der Querschnitt des erfindungsgemäßen Heizkörpers auf einen besonders hohen Wirkungsgrad hin ausgelegt werden.

Grundsätzlich kann dem erfindungsgemäßen Heizkörper also eine Vielzahl von Gestaltungsformen verliehen werden. Nach der Erfindung weist er zumindest einen in seiner Erstreckungsrichtung verlaufenden Falz in seiner Mantelfläche auf. Der Falz ist im Sinne einer scharfen Knickkante zu verstehen. An ihr erhält die Mantelfläche - eventuell zusätzlich zur Naht - eine Kante bzw. an ihr ändert die Mantelfläche ihre Richtung in der Regel um mehr als 90°. Dies bietet die Möglichkeit, zwei gleichartig geformte erfindungsgemäße Heizkörper derart nebeneinander anzuordnen, dass sie zwischen sich einen Raum einschließen, der als Durchflussleitung für ein zu erhitzendes Fluid genutzt werden kann. Damit kann auf sehr einfache und kostengünstige Weise ein Durchlauferhitzer ausgebildet werden, der auf ein separates Durchflussrohr für das zu erhitzende Fluid verzichtet. Dadurch lassen sich nicht nur ein Bauteil und somit Material- und Verarbeitungskosten sparen, sondern auch ein höherer Wirkungsgrad erreichen, weil die Außenwand des erfindungsgemäßen Heizkörpers zugleich die Innenwand des Durchflussrohres für das zu erhitzende Fluid darstellt. Damit sind erheblich geringere Wärmeverluste und ein erheblich besserer Wärmeübergang zu erwarten als im Stand der Technik.

Nach einer weiteren vorteilhaften Ausgestaltung der Erfindung kann der Heizkörper über eine axial- bzw. längsverlaufende konkave Einbuchtung oder Rille in weitgehend der gesamten Längserstreckung des Heizkörpers verfügen. Damit lässt sich ein Heizkörper ausbilden, der mit nur einem weiteren Heizkörper, insbesondere einem gleichartig ausgebildeten, einen größeren Raum und damit ein nennenswertes Volumen als Durchflussrohr für das zu erhitzende Fluid einschließen kann.

Nach einer weiteren vorteilhaften Ausgestaltung der Erfindung kann der Heizkörper über zwei axial längsverlaufende konkave Einbuchtungen über den wesentlichen Bereich seiner Mantelfläche verfügen. Zwischen den beiden parallel verlaufenden konkaven Einbuchtungen erhebt sich eine ihnen gegenüber konvexe Ausstülpung oder Rippe der Mantelfläche des Heizkörpers. Sie kann vom unverformten Blechzuschnitt ausgehend auch zusätzlich erzeugt werden, beispielsweise in einem gemeinsamen Tiefziehvorgang zusammen mit den Einbuchtungen. Durch diese besondere Form lässt sich eine im Heizkörper angeordnete Heizwendel in einem optimalen, beispielsweise möglichst geringen Abstand zur Mantelfläche anordnen. Der optimale Abstand kann im Gegensatz zu einer rohrförmigen Grundstruktur eines Heizkörpers über eine deutlich größere wasserberührte Fläche bestehen als im Stand der Technik. Damit bildet der erfindungsgemäße Heizkörper mit zwei parallelen konkaven Einbuchtungen und einer konvexen Rippe dazwischen eine besonders gute Abstrahlfläche für Wärmeenergie. Wird sie einer ebensolchen Abstrahlfläche eines weiteren erfindungsgemäßen Heizkörpers gegenüber angeordnet, ergibt sich ein besonders effektiver Durchlauferhitzer, wenn der Raum zwischen beiden Abstrahlflächen in Längsrichtung fluiddicht gestaltet und damit als Durchflussrohr für das zu erhitzenden Fluid ausgebildet wird.

Mit der Ausbildung zweier konkaver parallel verlaufender Einbuchtungen erhält der erfindungsgemäße Heizkörper eine bevorzugte Abstrahlrichtung für Wärmeenergie. In den verbleibenden Bereichen der Mantelfläche dagegen ist die Wärmeabstrahlung nicht zwingend erforderlich. Nach einer weiteren vorteilhaften Ausgestaltung der Erfindung kann der Heizkörper daher einen teilflächigen, axialverlaufenden Wärmeisolator und/oder Wärmereflektor auf der den konkaven Einbuchtungen gegenüberliegenden Seite verfügen. Während der Wärmereflektor vorzugsweise innerhalb des Heizkörpers und damit zumindest einseitig pulverberührt angeordnet wird, kann der Wärmeisolator sowohl innerhalb als auch außerhalb des Heizkörpers angebracht sein. Damit lässt sich die Wärmeabgabe auf einen bestimmten Bereich der Mantelfläche des Heizkörpers konzentrieren, z. B. auf Abstrahlflächen im Bereich der konkaven Einbuchtung. Dadurch und durch die Reduzierung der Wärmeverluste an die sonstige Umgebung lässt sich der Wirkungsgrad des Heizkörpers weiter erhöhen.

Für eine an sich weitgehend gleichmäßige Erhitzung des Heizkörpers, zum Schutz der Heizwendel und zur Aufrechterhaltung der elektrischen Isolation zwischen Heizwendel und Mantel sollte sie auch nach der Bearbeitung durch Rütteln, Verpressen oder Walzen einen Mindestabstand vom Mantel des Heizkörpers einhalten. Nach einer weiteren vorteilhaften Ausgestaltung der Erfindung kann der Heizkörper daher über Abstandshalter an der Heizwendel verfügen, damit ein z. B. gleichmäßiger, jedenfalls aber ein definierbarer Abstand der Heizwendel gegenüber dem Mantel eingehalten ist. Der Abstandhalter kann vormontiert sein und vorzugsweise aus gepresstem Magnesiumoxidpulver und damit aus demselben Material wie die Füllung des Heizkörpers bestehen. Dadurch ergibt sich eine homogene Füllung des Heizkörpers trotz Anordnung von Abstandshaltern.

Die Ausbildung des Heizkörpers geht grundsätzlich von einem rechteckigen Blechzuschnitt aus. Nach einer weiteren vorteilhaften Ausgestaltung der Erfindung kann der Heizkörper bzw. der Blechzuschnitt über eine über den rechteckigen Zuschnitt hinausgehende Montagelasche verfügen. Sie kann an beliebiger Stelle angeordnet sein und damit eine Befestigung beispielsweise eines Temperaturreglers oder eines Temperatursensors ermöglichen. Dadurch erleichtert sich dessen Montage, die beispielsweise durch eine Befestigung an einer gelochten Lasche schnell und einfach vorgenommen werden kann. Alternativ oder zusätzlich können an den Schmalseiten des Blechzuschnitts Schnittstellen zur Montage von axialen Endstücken ausgebildet sein, die einen dichten axialen Abschluss des Heizkörpers zwischen Heizwendel und Mantel herstellen. Die Schnittstellen können außerdem auch die Montage eines Sensors ermöglichen, beispielsweise eines NTC zur Ermittlung der Temperatur des erhitzen Fluids.

Nach einer weiteren vorteilhaften Ausgestaltung der Erfindung kann die Mantelfläche des Heizkörpers aus Edelstahlblech ausgebildet sein. Zwar verfügt Edelstahl über ein weniger homogenes Wärmeausbereitungs- bzw. -leitverhalten als Aluminium. Diese Einschränkung ist jedoch tolerabel, weil der Heizkörper ohnehin über einen höheren Wirkungsgrad verfügt. Mit Heizkörpern aus Edelstahl lässt sich jedoch ein Durchlauferhitzer ausbilden, dessen fluidberührte Flächen ebenfalls ausschließlich aus Edelstahl bestehen und damit eine evtl. separate Beschichtung von sonst üblicherweise verwendetem Aluminium erübrigen. Der Heizkörper bietet damit auch eine einfache und prozesssichere Herstellung beispielsweise durch Rollnahtschweißen oder Widerstands-Schmelzschweißen an seiner längsverlaufenden Naht.

Die eingangs genannte Aufgabe wird außerdem durch einen Durchlauferhitzer einer Heißgetränkezubereitungseinrichtung für Haushaltszwecke gelöst, der aus mindestens zwei vorher beschriebenen Heizkörpern ausgebildet ist. Erfindungsgemäß stellen die Heizkörper selbst bereits Teile eines Durchflussrohrs des Durchlauferhitzers dar. Damit erübrigen sie nicht nur ein derartiges separates Bauteil und dessen Montage, sondern auch die Herstellung eines Wärmeübergangs zwischen Heizkörper und Durchflussrohr, der regelmäßig verlustbehaftet ist. Der erfindungsgemäße Durchlauferhitzer bietet daher einen geringen Materialaufwand, weil er auf ein separates Durchflussrohr für das zu erhitzenden Fluid verzichten kann. Mit Wegfall des separaten Durchflussrohres ergibt sich auch ein höherer Wirkungsgrad des Durchlauferhitzers, weil er einen kurzen Weg für den Wärmeübergang zwischen der Heizwendel einerseits und dem zu erhitzenden Fluid andererseits bietet. Schließlich stellt sich auch seine Herstellung als kostengünstig dar, weil er nicht nur eine geringere Anzahl an Einzelteilen, sondern vor allem einen großen Anteil an gleichen Teilen ermöglicht. Auch erfindungsgemäße Heizkörper aus Edelstahl lassen sich untereinander einfach und zuverlässig durch Rollnahtschweißen oder Widerstands-Schmelzschweißen zu dem erfindungsgemäßen Durchlauferhitzer verbinden.

Da die erfindungsgemäßen Heizkörper des Durchlauferhitzers einzeln hergestellt werden können, lassen sie sich anschließend auf ihre tatsächliche Leistung hin überprüfen und sortieren bzw. paaren. So können beispielsweise schwächere mit stärkeren Heizkörpern kombiniert werden, so dass sich Durchlauferhitzer weitgehend gleicher Leistung herstellen lassen. Alternativ können schwächere Heizkörper zu einem schwächeren Durchlauferhitzer und stärkere zu einem stärkeren Durchlauferhitzer kombiniert werden.

Mit ihren einander zugewandten Seiten bilden die Heizkörper das Durchflussrohr des Durchlauferhitzers. Es weist Schnittstellen auf, über die der Durchlauferhitzer in ein Fluidsystem eingebunden werden kann. Die Schmalseiten des Blechzuschnitts der Heizkörper können im Bereich der Einbuchtungen derartige Schnittstellen bzw. Teile davon ausbilden, indem an jedem Heizkörper eines Durchlauferhitzers mit zwei Heizkörpern eine Hälfte einer Schnittstelle ausgebildet ist. In einer ersten Ausgestaltungsform können sie beispielsweise mit einer geeigneten Formgebung und zusätzlichen Rillen, Nuten und dergleichen derart gestaltet sein, dass sie ein zwischen die beiden Heizkörper eingelegtes separates Anschlussteil als Fluidanschluss des Durchflussrohrs aufnehmen. Bei der Verbindung der beiden Heizkörper halten sie das Anschlussteil durch Formschluss und/oder Stoffschluss fluiddicht in Form und Lage. Das Anschlussteil kann also z. B. mit den Hälften, die gemeinsam eine Schnittstelle bilden, verschweißt oder verpresst werden. Zusätzlich können an den Anschlussteilen - wie im Stand der Technik üblich - Dichtmittel angeordnet sein, beispielsweise als Weichstoffdichtung eingelegt oder bei Kunststoffteilen mit angespritzt sein. Die Anschlussteile können dabei an ihren dem Durchlauferhitzer abgewandten Enden alle im Stand der Technik bekannten Geometrien zum Anschluss an ein Fluidsystem aufweisen.

In einer zweiten, alternativen Ausgestaltungsform können die Schmalseiten des Blechzuschnitts der Heizkörper derart gestaltet sein, dass sie beim Zusammenfügen der Heizkörper z. B. durch Verschweißen die Schnittstellen bilden, in die die Anschlussteile unmittelbar eingesteckt und an der Heizung unmittelbar befestigt werden können. Diese können dann z. B. radial durch Weichstoffdichtungen abdichten. Beispielsweise können zwei Heizkörper gemeinsam an ihrem rohrähnlichen Ende eine Art Bajonettverschluss ausbilden, in den ein Anschlussteil aus Kunststoff dichtend eingesetzt werden kann. Alternativ dazu kann ein vorgefertigtes Metallteil als Schnittstelle zu dem Anschlussteil aus Kunststoff eingeschweißt werden.

Die eingangs genannte Aufgabe wird außerdem durch ein Verfahren zur Herstellung eines Heizkörpers nach einem der obigen Ansprüche für einen Durchlauferhitzer einer Heißgetränkezubereitungseinrichtung für Haushaltszwecke mit einer metallischen Mantelfläche, mit einer Füllung aus Magnesiumoxidpulver und mit einer darin eingeschlossenen Heizwendel gelöst, dass folgende Schritte umfasst:
a) Aufbiegen des Blechzuschnitts um eine parallel zu einer Längsseite des Blechzuschnitts verlaufende Biegeachse,
b) Positionieren einer vorbestimmten Menge an Magnesiumoxidpulver auf einem rechteckigen Blechzuschnitt,
c) Einlegen eines Heizwendel parallel zur Längsseite,
d) Verschließen des Blechzuschnitts zu einem zylindrischen Heizkörper.

Zunächst ist also ein im Wesentlichen rechteckiger Blechzuschnitt mit zwei Längsseiten und zwei schmalen Seiten beispielsweise durch Stanzen herzustellen. Gegebenenfalls können an einer der Längsseiten oder Schmalseiten eine oder mehrere Laschen für die Befestigung von Temperaturreglern oder -sensoren angeordnet sein. Daraufhin werden in Schritt a) zwei Seiten des Blechzuschnitts parallel zu seinen Längsseiten zu einer U-förmigen Grundform aufgebogen, um anschließend in Schritt b) Magnesiumoxidpulver in einer vorbestimmten Menge zwischen die aufgebogenen Seiten einzufüllen. Alternativ kann auch zuerst in Schritt a) eine definierte Menge an Magnesiumoxidpulver z. B. mit einer Schablone aufgebracht werden, um das Pulver an einem geeigneten Ort zu positionieren. Anschließend wird in Schritt b) - gegebenenfalls unter Zuhilfenahme der Schablone - der Blechzuschnitt z.B. um 90° gegenüber einer Ausgangsebene aufgebogen bzw. hochgebogen, um das Pulver in einer Längsrichtung des zukünftigen Heizkörpers räumlich zu begrenzen.

Anschließend wird in einem Schritt c) eine Heizwendel parallel zur Längsseite des Blechzuschnitts eingelegt und gegebenenfalls mit weiterem Pulver bedeckt. Zusätzlich kann der Blechzuschnitt gerüttelt werden, um Lufteinschlüsse zu verringern und die Dichte des Magnesiumoxidpulvers um die Heizwendel herum zu erhöhen.

Abschließend wird in einem Schritt d) der Blechzuschnitt um das Magnesiumpulver und die darin eingebettete Heizwendel herum zu einem zylindrischen Heizkörper entlang einer längsverlaufenden Naht verschlossen. Dies kann mechanisch bzw. formschlüssig beispielsweise durch Falzen oder Crimpen erfolgen oder stoffflüssig durch Schweißen oder Löten.

Dieses Herstellungsverfahren bietet gegenüber dem Stand der Technik den erheblichen Vorteil, dass insbesondere das Pulver, aber auch die Heizwendel über eine große Montageöffnung und damit äußerst bequem und fehlerunanfällig eingebracht werden können. Insbesondere das Einbringen des Magnesiumoxidpulvers in den Heizkörper, das über die gesamte Länge der Heizwendel eingefüllt werden kann, kann schneller erfolgen und reduziert den Bedarf eines Rüttelns bzw. Verdichtens. Das Einbetten der Heizwendel in das Magnesiumoxidpulver lässt sich dadurch wesentlich leichter und unter geringeren Lufteinschlüssen erzielen. Dadurch lassen sich Heizkörper mit höherer und gleichbleibender Qualität herstellen, so dass die Herstellung an sich erleichtert und Ausschuss bei der Herstellung verringert werden kann.

Nach einer weiteren vorteilhaften Ausgestaltung des erfindungsgemäßen Verfahrens kann die Heizwendel vor ihrem Einlegen in Schritt c) mit Endkontakten und isolierten Endstücken und/oder mit Abstandshaltern vormontiert werden. Die Vormontage von Endkontakten und isolierenden Endstücken erlaubt im Schritt d) ein vollständiges Verschließen des Heizkörpers, ohne dass ein weiterer Verfahrensschritt dafür notwendig würde. Gegebenenfalls können auch Abstandshalter auf der Heizwendel vormontiert werden. Dann kann eine mit Abstandshaltern versehene Heizwendel auf dem Blechzuschnitt positioniert werden, bevor das Magnesiumpulver eingebracht wird.

Nach einer weiteren vorteilhaften Ausgestaltung des erfindungsgemäßen Verfahrens kann die Heizwendel mit, auf oder in einem gepressten Kern aus Magnesiumoxidpulver vormontiert sein. Ein großer Teil der Pulvermenge kann also bereits an der Heizwendel montiert sein, woraus sich eine optimale dichte Lagerung des Pulvers an der Heizwendel ergibt. Ein Rütteln oder Verpressen kann damit reduziert oder überflüssig werden. Auch das Restbefüllen bzw. Auffüllen des Blechzuschnitts vor seinem Verschluss kann dadurch reduziert werden oder ganz entfallen, was einen erheblichen Zeitvorteil dieses Herstellungsverfahrens darstellt.

Nach einer weiteren vorteilhaften Ausgestaltung des erfindungsgemäßen Verfahrens kann in dem Blechzuschnitt vor einem Positionieren einer definierten Menge an Magnesiumoxidpulver in Schritt a) oder vor seinem Aufbiegen in Schritt b) beispielsweise durch Tiefziehen zumindest eine parallel zur einer Längsseite verlaufende konvexe Verformung ausgebildet werden. In dem gleichen oder einem nachfolgenden Schritt können außerdem Aufnahmebereiche für isolierende Endstücke, z. B. Bajonettverschluss-Schnittstellen ausgebildet werden. Dadurch kann der spätere Heizkörper die gewünschte Form zur Ausbildung eines Durchlauferhitzers erhalten und die Montage einer vormontierten Heizwendel erleichtert werden.

Nach einer weiteren vorteilhaften Ausgestaltung des erfindungsgemäßen Verfahrens kann das Magnesiumoxidpulver im Heizkörper nach dem Schritt d) verpresst werden. Sollte also noch ein Bedarf an Verdichtung des Pulvers um die Heizwendel herum bestehen, so kann der Heizkörper wie im Stand der Technik gepresst werden. Aufgrund seiner separaten Herstellung kann er von mehreren Seiten als nur von zwei Seiten verpresst werden, was ein ungewolltes Deformieren der Heizwendel verhindert. Alternativ kann er auch von mehreren Seiten gewalzt werden, womit eine homogenere und gleichmäßige Verdichtung des Magnesiumoxidpulvers erzielt werden kann.

Das Herstellungsverfahren eignet sich darüber hinaus gut für eine Endlosherstellung der Heizkörper an unmittelbar aufeinanderfolgenden Bearbeitungsstationen. So kann der Blechzuschnitt direkt von einer Bandstahlrolle oder Coil gewonnen werden. Das Aufbiegen, Befüllen, Einlegen der Heizwendel und Verschließen des Heizkörpers bis hin zur Montage eines Durchlauferhitzers aus mindestens zwei Heizkörpern können sich unmittelbar daran anschließen.

Die eingangs genannte Aufgabe wird außerdem durch ein Verfahren zur Herstellung eines Durchlauferhitzers einer Heißgetränkezubereitungseinrichtung für Haushaltszwecke aus mindestens zwei Heizkörpern der eingangs genannten Art gelöst, indem die Heizkörper parallel nebeneinander und unter Ausbildung eines rohrförmigen Zwischenraumes fluiddicht aneinander befestigt werden. Als Montagearten bieten sich Löten, Bördeln, Schweißen oder dergleichen an. Mit denkbar geringem Aufwand lässt sich so lediglich aus Heizkörpern ein Durchlauferhitzer herstellen, der auf ein separates Durchflussrohr verzichten kann und damit nicht nur Material einspart, sondern einen höheren Wirkungsgrad verspricht.

Nach einer weiteren vorteilhaften Ausgestaltung des erfindungsgemäßen Verfahrens zur Herstellung eines Durchlauferhitzer können Heizkörper mit konkaven Einbuchtungen verwendet werde, indem sie mit ihren konkaven Einbuchtungen aufeinander zuweisend parallel nebeneinander fluiddicht aneinander befestigt werden. Die aufeinander zuweisenden konkaven Einbuchtungen bilden vorteilhafterweise ein Durchflussrohr für das zu erhitzende Fluid. Damit genügen bereits zwei Heizkörper zur Ausbildung eines erfindungsgemäßen Durchlauferhitzers, der einen geringst möglichen Aufwand erfordert und dabei einen denkbar hohen Wirkungsgrad erreicht.

Das Prinzip der Erfindung wird im Folgenden anhand einer Zeichnung beispielshalber noch näher erläutert. In der Zeichnung zeigen:
- Figur 1:: einen Schnitt durch einen erfindungsgemäßen Heizkörper,
- Figur 2:: einen Schnitt durch einen erfindungsgemäßen Durchlauferhitzer aus zwei Heizkörpern gemäß Figur 1, und
- Figur 3:: einen schematisierten Ablauf der Herstellung eines erfindungsgemäßen Heizkörpers.

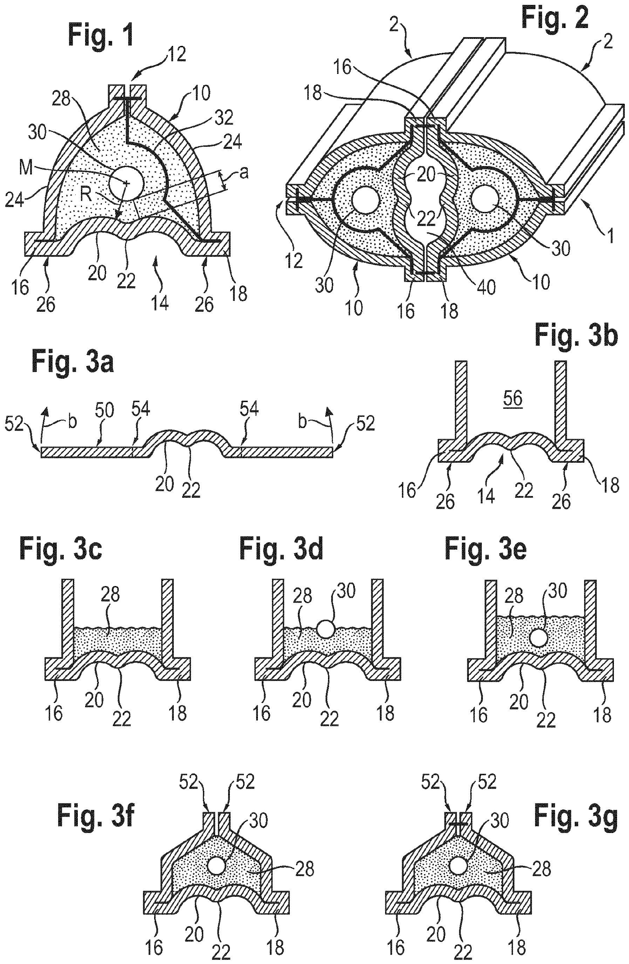

Figur 1 zeigt eine Schnittansicht durch einen erfindungsgemäßen Heizkörper 2. Er weist eine glockenförmige Grundform auf und besteht aus einem Blechmantel 10 aus gebogenem Edelstahlblech. An seiner Oberseite trägt der Heizkörper 2 eine Naht 12, an der zwei Längsseiten des Blechmantels 10 aufeinander liegen und dicht miteinander verschweißt sind. Seine gegenüberliegende Basis 14 des Heizkörpers 2 erstreckt sich zwischen einem ersten Falz 16 und einem zweiten Falz 18. Dort weist der Heizköper 2 zwei konkave, sich in seiner Längsrichtung (senkrecht zur Blattebene) erstreckende parallel nebeneinander verlaufende Rillen oder Einbuchtungen 20 auf. Zwischen ihnen verläuft eine konvexe Rippe 22 als Trennung der beiden konkaven Einbuchtungen 20 voneinander. Am ersten Falz 16 und am zweiten Falz 18 ist der Mantel 10 jeweils um 180° geknickt, bevor er in die Basis 14 einerseits und in eine glockenförmige Wölbung 24 andererseits übergeht. Der erste Falz 16 und der zweite Falz 18 bilden damit außerdem zwei ebene, streifenförmige Kontaktflächen 26 beidseits der Basis 14 aus.

Die profilierte Basis 14 und die Wölbungen 24 schließen gemeinsam einen Raum ein, der mit Magnesiumoxidpulver 28 vollständig gefüllt ist. Darin eingebettet liegt eine elektrische Heizwendel 30, die sich in Längsrichtung des Heizkörpers 2 erstreckt. Sie ist in der Form einer zylindrischen Spule um einen Mittelpunkt M gewickelt. Ihr Mittelpunkt M bestimmt zugleich einen Ausrundungsradius R für die konvexe Rippe 22. Jene ist also danach ausgebildet und bemessen, dass die Heizwendel 30 mit ihr koaxial verlaufend in den Heizkörper 2 eingebaut werden kann. Damit hat die Heizwendel 30 gegenüber der konvexen Rippe 22 in einem gewissen Drehwinkelbereich vom Mittelpunkt M aus betrachtet einen konstanten Stand a. Der Abstand a ist der optimale Abstand, den die Heizwendel 30 gegenüber dem Mantel 10 einnimmt, um einen möglichst effektiven Wärmeübergang von der Heizwendel 30 auf die Rippe 22 zu erreichen. In demjenigen Bereich, in dem die Heizwendel 30 den optimalen Abstand a von der konvexen Rippe 22 und mithin vom Mantel 10 einhält, ist der beste Wärmeübergang von der Heizwendel 30 auf den Mantel 10 zu erwarten. Damit definiert die konvexe Rippe 22, die durch die beiden beidseits von ihr verlaufenden konkaven Einbuchtungen 20 entsteht, eine bevorzugte Wärmeabstrahlfläche des Heizkörpers 2 an dessen Basis 14.

Im übrigen Bereich des Mantels 10, insbesondere im Bereich der Wölbungen 24, findet zwar auch eine Wärmeabstrahlung statt, sie ist jedoch nicht so stark wie an der Basis 14. Um die Wärmeabstrahlung dort zu konzentrieren und an den Wölbungen 24 zu reduzieren, umfasst der Heizkörper 2 außerdem einen Reflektor 32, der sich von der zweiten Falz 18 in die Naht 12 hinein erstreckt und sowohl dort als auch in der Falz 18 befestigt ist. Ein spiegelbildlicher Reflektor erstreckt sich außerdem von der ersten Falz 16 zur Naht 12, ist in Figur 1 aber aus Gründen der Übersichtlichkeit weggelassen. Der Reflektor 32 reduziert die Abstrahlung der Heizwendel 30 über die Wölbung 24 und konzentriert sie auf die Basis 14. Damit kann der Wirkungsgrad des Heizkörpers 2 weiter erhöht werden.

Figur 2 zeigt nun eine perspektivische Schnittansicht durch einen erfindungsgemäßen Durchlauferhitzer 1, der sich aus zwei Heizkörpern 2 gemäß Figur 1 zusammensetzt. Erfindungsgemäß werden nun die beiden Heizkörper 2 mit ihren Basen 14 aufeinander zu gerichtet und dort an den Kontaktflächen 26 im Bereich der ersten Falzen 16 und zweiten Falzen 18 fluiddicht miteinander verschweißt. Die beiden längs und parallel zueinander verlaufenden konkaven Einbuchtungen 20 und die konvexen Rippen 22 stehen sich also einander gegenüber und bilden zusammen einen Hohlraum mit einer Querschnittsform ähnlich einer "8". Da die beiden Heizkörper 2 an den Kontaktflächen 26 fluiddicht miteinander verbunden sind, bildet der Hohlraum ein Durchflussrohr 40 für zu erhitzendes Wasser des Durchlauferhitzers 2. Er kann also auf ein separates Durchflussrohr verzichten und trennt das zu erhitzende Wasser durch ein einziges metallisches Bauteil, nämlich den Mantel 10, von der Magnesiumoxidpulverfüllung 28 und der Heizwendel 30. Damit ist ein äußerst kurzer und verlustarmer Wärmeübertragungsweg zwischen der Heizwendel 30 einerseits und dem Wasser im Durchflussrohr 40 andererseits hergestellt. Die Gestaltung der Basen 14 mit konvexen Rippen 22 und konkaven Einbuchtungen 20 führt zu einem großen Querschnitt des Durchflussrohres 40, das noch dazu insbesondere im Bereich der konvexen Rippen 22 einen hohen Wärmeeintrag erwarten lässt.

Figur 3 zeigt stark schematisiert einen Herstellungsvorgang eines erfindungsgemäßen Heizkörpers 2 in sieben wesentlichen Schritten. Figur 3a zeigt einen rechteckigen Blechzuschnitt 50 in einer Schnittansicht. In seinem mittleren Bereich und parallel zu seinen Längsrändern 52 verlaufen zwei parallel zu jenen und aus Sicht des zukünftigen Heizkörpers 2 betrachtet konkave Einbuchtungen 20 mit einer dazwischenliegenden konvexen Rippe 22. Diese Formgebung wird durch Tiefziehen des Blechzuschnitts 50 erreicht. In einem anschließenden Bearbeitungsschritt wird der Blechzuschnitt 50 in einem Bereich zwischen den Längsrändern 52 und einer parallel dazu verlaufenden Knicklinie 54 in Richtung der Pfeile b aufgebogen und umgebördelt. Daraus entstehen die Falze 16, 18 gemäß Figur 3b (vgl. auch Figur 1). Der nicht umgebogene Teil des Blechzuschnitts 50 bildet nun die Basis 14 des zukünftigen Heizkörpers 22, der sich zwischen den Falzen 16, 18 erstreckt und die Kontaktflächen 26 sowie die konkaven Einbuchtungen 20 und die konvexe Rippe 22 umfasst.

In den dadurch entstehenden rinnenförmigen Innenraum 56 wird nun gemäß Figur 3c Magnesiumoxidpulver 28 in einer vorbestimmten Menge eingefüllt. Anschließend wird gemäß Figur 3d die Heizwendel 30 in dem Magnesiumoxidpulver 28 eingebettet. Ihre Montage ist bequem und daher wenig fehleranfällig, weil sie in den auf der gesamten Länge des zukünftigen Heizkörpers 2 oberseitig offenen Innenraum 56 eingelegt werden kann. Das Einbetten der Heizwendel 30 in das Magnesiumoxidpulver 28 kann durch Rütteln unterstützt werden, so dass Lufteinschlüsse im Magnesiumoxidpulver 28 reduziert werden.

In einem anschließenden Schritt wird weiteres Magnesiumoxidpulver 28 ergänzt, bis die Heizwendel 30 gemäß Figur 3e vollständig damit umgeben ist. Jetzt wird gemäß Figur 3f der Blechzuschnitt 50 in seine angestrebte glockenförmige Querschnittsform gebracht, in dem er an seinen Längsrändern 52 aufeinandergelegt und verschlossen wird.

In einem letzten Schritt gemäß Figur 3g werden die Längsränder 52 miteinander verschweißt, wobei sie die Naht 12 (vgl. auch Figur 1) ausbilden. Gleichzeitig oder anschließend kann das Magnesiumoxidpulver 28 durch Pressen, Walzen oder Rütteln des Heizkörpers 2 von außen verdichtet werden, sofern erforderlich. Damit ist der Heizkörper 2 im Wesentlichen fertiggestellt und kann in einem weiteren Schritt zusammen mit einem gleichartigen Heizkörper 2 zu einem erfindungsgemäßen Durchlauferhitzer 1 gemäß Figur 2 montiert werden.

Da es sich bei dem vorhergehenden, detailliert beschriebenen Heizkörper bzw. Durchlauferhitzer jeweils um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Querschnittsform des Heizkörpers in anderer Form als in der hier beschriebenen erfolgen. Folglich kann auch der Durchlauferhitzer aus anderen und/oder mehr als zwei Heizkörpern bestehen und damit in einer anderen Form ausgestaltet werden, wenn dies aus Platzgründen bzw. designerischen Gründen notwendig ist. Weiter schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Durchlauferhitzer
- 2: Heizkörper
- 10: Mantel
- 12: Naht
- 14: Basis
- 16: erster Falz
- 18: zweiter Falz
- 20: konkave Einbuchtung
- 22: konvexe Rippe
- 24: Wölbung
- 26: Kontaktfläche
- 28: Magnesiumoxidpulver
- 30: Heizwendel
- 32: Reflektor
- 40: Durchflussrohr
- 50: Blechzuschnitt
- 52: Längsrand
- 54: Knicklinie
- a: Abstand
- b: Pfeil
- R: Radius
- M: Mittelpunkt

## Patentansprüche

1. Zylindrischer Heizkörper (2) für einen Durchlauferhitzer (1) einer Heißgetränkezubereitungseinrichtung für Haushaltszwecke mit einer metallischen Mantelfläche (10), einer Füllung aus Magnesiumoxidpulver (28), einer darin eingeschlossenen Heizwendel (30), einer Mantelfläche (10) aus verformtem Blech und mindestens einer Naht (12) in der Mantelfläche (10), **gekennzeichnet durch** mindestens einen Falz (16; 18) in der Mantelfläche (10).

2. Heizkörper (2) nach einem der obigen Ansprüche, **gekennzeichnet durch** eine längsverlaufende konkave Einbuchtung (22) in der Mantelfläche (10).

3. Heizkörper (2) nach einem der obigen Ansprüche, **gekennzeichnet durch** einen teilflächigen axial verlaufenden Wärmeisolator und/oder Wärmereflektor (32).

4. Heizkörper (2) nach einem der obigen Ansprüche, **gekennzeichnet durch** eine Mantelfläche (10) aus Edelstahlblech.

5. Durchlauferhitzer (1) einer Heißgetränkezubereitungseinrichtung für Haushaltszwecke umfassend mindestens zwei Heizkörper (2) nach einem der obigen Ansprüche.

6. Verfahren zur Herstellung eines Heizkörpers (2) für einen Durchlauferhitzer (1) einer Heißgetränkezubereitungseinrichtung für Haushaltszwecke nach einem der obigen Ansprüche, mit den folgenden Schritten:
a) Aufbiegen des Blechzuschnitts (50) um eine parallel zu einer Längsseite (52) des Blechzuschnitts (50) verlaufende Biegeachse (54),
b) Portionieren einer vorbestimmten Menge an Magnesiumoxidpulver (28) auf einem rechteckigen Blechzuschnitt (50),
c) Einlegen einer Heizwendel (30) parallel zur Längsseite (54),
d) Verschließen des Blechzuschnitts (50) zu einem zylindrischen Heizkörper (2).

7. Verfahren nach dem obigen Verfahrensanspruch, **dadurch gekennzeichnet, dass** vor dem Schritt c) die Heizwendel (30) mit Endkontakten und isolierenden Endstücken und/oder Abstandhaltern vormontiert wird.

8. Verfahren nach einem der obigen Verfahrensansprüche, **dadurch gekennzeichnet, dass** die Heizwendel (30) mit einem vorgepressten Kern aus Magnesiumoxidpulver vormontiert wird.

9. Verfahren zur Herstellung eines Durchlauferhitzers (1) einer Heißgetränkezubereitungseinrichtung für Haushaltszwecke aus mindestens zwei Heizkörpern (2) nach einem der obigen Ansprüche 1 bis 5, die in einem Verfahren nach einem der Ansprüche 6 bis 8 hergestellt werden, wobei sie parallel nebeneinander und unter Ausbildung eines rohrförmigen Zwischenraums (40) fluiddicht aneinander befestigt werden.

## Claims

1. Cylindrical radiator (2) for a continuous-flow heater (1) in a hot beverage preparation device for household purposes with a metallic lateral area (10), a filler made from magnesium oxide powder (28), a heating coil (30) enclosed therein, a lateral area (10) made from deformed metal sheet and at least one seam (12) in the lateral area (10), **characterised by** at least one fold (16; 18) in the lateral area (10).

2. Radiator (2) according to one of the above claims, **characterised by** a longitudinal concave recess (22) in the lateral area (10).

3. Radiator (2) according to one of the above claims, **characterised by** a heat insulator and/or heat reflector (32) running axially over a partial area.

4. Radiator (2) according to one of the above claims, **characterised by** a lateral area (10) made from sheet stainless steel.

5. Continuous-flow heater (1) of a hot beverage preparation device for household purposes comprising at least two radiators (2) according to one of the above claims.

6. Method for producing a radiator (2) for a continuous-flow heater (1) in a hot beverage preparation device for household purposes according to one of the above claims, having the following steps:
a) bending up the sheet metal blank (50) around a bending axis (54) running parallel to a longitudinal side (52) of the sheet metal blank (50),
b) portioning a predetermined quantity of magnesium oxide powder (28) on a rectangular sheet metal blank (50),
c) placing a heating coil (30) parallel to the longitudinal side (54),
d) closing the sheet metal blank (50) with respect to a cylindrical radiator (2).

7. Method according to the above method claim, **characterised in that** before step c) the heating coil (30) is preassembled with end contacts and insulating end pieces and/or spacers.

8. Method according to one of the above method claims, **characterised in that** the heating coil (30) is preassembled with a prepressed core made from magnesium oxide powder.

9. Method for producing a continuous-flow heater (1) in a hot beverage preparation device for household purposes comprising at least two radiators (2) according to one of the above claims 1 to 5, which are produced in a method according to one of claims 6 to 8, wherein they are fastened in parallel adjacent to one another and by forming a tubular intermediate space (40) in a fluid-tight manner against one another.

## Revendications

1. Corps chauffant cylindrique (2) pour le chauffe-eau instantané (1) d'un dispositif de préparation de boissons chaudes à usages ménagers, avec une surface faisant manteau métallique (10), un remplissage de poudre d'oxyde de magnésium (28), un filament de chauffage (30) y inclus, une surface faisant manteau (10) en tôle usinée et au moins un joint (12) dans la surface faisant manteau (10), **caractérisé par** au moins une rainure (16; 18) dans la surface faisant manteau (10).

2. Corps chauffant (2) selon l'une des revendications précédentes, **caractérisé par** un creux (22) concave s'étendant dans le sens longitudinal dans la surface faisant manteau (10).

3. Corps chauffant (2) selon l'une des revendications précédentes, **caractérisé par** un isolant thermique et/ou un réflecteur thermique (32) s'étendant axialement sur une partie de la surface.

4. Corps chauffant (2) selon l'une des revendications précédentes, **caractérisé par** une surface faisant manteau (10) en tôle d'acier spécial.

5. Chauffe-eau instantané (1) d'un dispositif de préparation de boissons chaudes à usages ménagers comprenant au moins deux corps chauffants (2) selon l'une des revendications précédentes.

6. Procédé de fabrication d'un corps chauffant (2) pour un chauffe-eau instantané (1) d'un dispositif de préparation de boissons chaudes à usages ménagers selon l'une des revendications précédentes, avec les étapes suivantes:
a) pliage de la coupe de tôle (50) autour d'un axe de pliage (54) passant parallèlement à un côté longitudinal (52) de la coupe de tôle (50),
b) dosage d'une quantité prédéterminée de poudre d'oxyde de magnésium (28) sur une coupe de tôle (50) à angle droit,
c) dépose d'un filament de chauffage (30) parallèlement au côté longitudinal (54),
d) fermeture de la coupe de tôle (50) en un corps chauffant cylindrique (2).

7. Procédé selon la revendication précédentes, **caractérisé en ce qu'**avant l'étape c), le filament de chauffage (30) est préassemblé avec des contacts terminaux et des pièces terminales isolantes et/ou des entretoises.

8. Procédé selon l'une des revendications précédentes, **caractérisé en ce que** le filament de chauffage (30) est préassemblé avec un noyau de poudre d'oxyde de magnésium ébauché à la presse.

9. Procédé de fabrication du chauffe-eau instantané (1) d'un dispositif de préparation de boissons chaudes à usages ménagers constitué d'au moins deux corps chauffants (2) selon l'une des revendications 1 à 5 précédentes, qu'on a fabriqués dans un procédé selon l'une des revendications 6 à 8, dans lequel ceux-ci sont fixés l'un à l'autre à étanchéité aux fluides parallèlement l'un à côté de l'autre et avec formation d'un espace intermédiaire (40) tubulaire.
